(19) Europäisches Patentamt / European Patent Office / Office européen des brevets

(11) EP 4 768 545 A1

(12) EUROPEAN PATENT APPLICATION
published in accordance with Art. 153(4) EPC

(43) Date of publication:
01.07.2026 Bulletin 2026/27

(21) Application number: 24859210.7

(22) Date of filing: 18.07.2024

(51) International Patent Classification (IPC):
C09C 3/06 (2006.01)  C08K 7/00 (2006.01)
C08L 101/00 (2006.01)  C09D 17/00 (2006.01)

(52) Cooperative Patent Classification (CPC):
C08K 7/00; C08L 101/00; C09C 3/06; C09D 17/00

(86) International application number:
PCT/JP2024/025775

(87) International publication number:
WO 2025/047166 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.08.2023 JP 2023137238

(71) Applicant: Nippon Sheet Glass Company, Limited
Tokyo 108-6321 (JP)

(72) Inventor: HIOKI, Masahiro
Tokyo 108-6321 (JP)

(74) Representative: Cabinet Beau de Loménie
103, rue de Grenelle / CS 90800
75340 Paris Cedex 07 (FR)

(54) PHOTOLUMINESCENT PIGMENT AND RESIN COMPOSITION

(57) A glitter pigment includes a flaky particle and a metal oxide layer formed on at least a portion of the surface of the flaky particle. The average particle size of the glitter pigment is 90 μm or more, and the average thickness of the glitter pigment is more than 5 μm and 15 μm or less, and the ratio of the average particle size to the average thickness is 10 or more and 30 or less. The glitter pigment is suitable for use as a filler for imparting glitter to a resin composition, and furthermore, can enhance the appearance of a resin molded article including the glitter pigment. The resin molded article includes the glitter pigment and a matrix resin.

EP 4 768 545 A1

**Description**

TECHNICAL FIELD

The present invention relates to a glitter pigment and a resin composition.

BACKGROUND ART

A glitter pigment typically includes flaky particles. The flaky particles are, for example, mica, synthetic mica, talc, glass flakes, silica flakes, or flaky bismuth oxychloride. A glitter pigment also includes a coating layer on the surface of each flaky particle in some cases. The coating layer may be either a single-layer or a multi-layer. The layer forming the coating layer is, for example, a metal oxide layer including titanium oxide, iron oxide, or the like, or a metal layer of silver, copper, aluminum, or the like. The glitter pigment is, for example, used by itself alone in a cosmetic, a paint composition, or the like, or used as a filler for imparting glitter to a resin composition.

According to the description of Patent Literature 1, by adopting, as a metallic pigment for kneading into a resin, metal-coated glass flakes having an average aspect ratio (thickness/particle size) of 1/9 to 1 and an average particle size of 25 to 500 $\mu$m, formation of weld lines on the surface of a molded article can be suppressed. A weld line is a linear mark that can be generated when flows of molten resin merge inside a mold for injection molding, causing an appearance defect in a resin molded article. In particular, fine particles generated by breakage of flaky particles during kneading or molding of a resin composition tend to form a layer having a low particle concentration near the flow front of the molten resin inside the mold for injection molding. The layer having a low particle concentration forms a non-uniform layer at the merging point of the flows of the molten resin. This non-uniform layer remains as a weld line on the surface of the resin molded article. Furthermore, the weld line can also cause a reduction in the strength of the resin molded article.

CITATION LIST

Patent Literature

Patent Literature 1: JP 3456252 B

SUMMARY OF INVENTION

Technical Problem

The metallic pigment of Patent Literature 1 is less susceptible to breakage when kneaded into and molded with a synthetic resin, and can suppress deterioration in appearance caused by the generation of weld lines on the surface of the resulting resin molded article. However, according to studies by the present inventor, when the average aspect ratio and the average particle size of the metallic pigment of Patent Literature 1, which has a structure in which a metal layer is formed on the surface of each glass flake, are applied to a glitter pigment in which a metal oxide layer is formed on the surface of each flaky particle, the desired effect may not be achieved.

One object of the present invention is to improve a glitter pigment suitable for use as a filler for imparting glitter to a resin composition. Another object of the present invention is to suppress deterioration in the appearance of a resin molded article including a glitter pigment.

Solution to Problem

One aspect of the present invention provides a glitter pigment including: a flaky particle; and a metal oxide layer formed on at least a portion of a surface of the flaky particle, wherein an average particle size is 90 $\mu$m or more, and an average thickness is more than 5 $\mu$m and 15 $\mu$m or less, and a ratio of the average particle size to the average thickness is 10 or more and 30 or less.

Another aspect of the present invention provides a resin composition including a glitter pigment and a matrix resin, the glitter pigment including: a flaky particle; and a metal oxide layer formed on at least a portion of a surface of the flaky particle, wherein an average particle size of the glitter pigment is 90 $\mu$m or more, and an average thickness of the glitter pigment is more than 5 $\mu$m and 15 $\mu$m or less, and a ratio of the average particle size of the glitter pigment to the average thickness of the glitter pigment is 10 or more and 30 or less.

Advantageous Effects of Invention

According to the present invention, it is possible to provide a glitter pigment suitable for use as a filler for imparting glitter to a resin composition, and furthermore, enhance the appearance of a resin molded article including the glitter pigment.

BRIEF DESCRIPTION OF DRAWINGS

FIG. 1 is a schematic diagram illustrating an exemplary apparatus for producing glass flakes.
FIG. 2 is a schematic diagram illustrating another exemplary apparatus for producing glass flakes.

DESCRIPTION OF EMBODIMENTS

Embodiments of the glitter pigment and the resin composition of the present invention will be described below in detail. The following description is not intended to limit the present invention to specific embodiments.
A glitter pigment according to a first aspect of the present invention includes:
a flaky particle; and a metal oxide layer formed on at least a portion of a surface of the flaky particle, wherein an average particle size is 90 $\mu$m or more, and an average thickness is more than 5 $\mu$m and 15 $\mu$m or less, and a ratio of the average particle size to the average thickness is 10 or more and 30 or less.
In a second aspect of the present invention, for example, in the glitter pigment according to the first aspect, the flaky particle is made of glass.
In a third aspect of the present invention, for example, in the glitter pigment according to the first or second aspect, the average particle size is 220 $\mu$m or less.
A resin composition according to a fourth aspect of the present invention includes a glitter pigment and a matrix resin, the glitter pigment including:
a flaky particle; and a metal oxide layer formed on at least a portion of a surface of the flaky particle, wherein an average particle size of the glitter pigment is 90 $\mu$m or more, and an average thickness of the glitter pigment is more than 5 $\mu$m and 15 $\mu$m or less, and a ratio of the average particle size of the glitter pigment to the average thickness of the glitter pigment is 10 or more and 30 or less.
In a fifth aspect of the present invention, for example, in the resin composition according to the fourth aspect, the flaky particle is made of glass.
In a sixth aspect of the present invention, for example, in the resin composition according to the fourth or fifth aspect, the average particle size of the glitter pigment is 220 $\mu$m or less.
In a seventh aspect of the present invention, for example, in the resin composition according to any one of the fourth to sixth aspects, the matrix resin is a thermoplastic resin.
In an eighth aspect of the present invention, for example, in the resin composition according to the seventh aspect, the thermoplastic resin is at least one selected from the group consisting of polypropylene, polyethylene, polybutylene terephthalate, polyethylene terephthalate, polycarbonate, a polystyrene-based resin, a styrene-acrylonitrile copolymer resin, polyacrylate, a styrene-butadiene-acrylonitrile copolymer resin, polyarylene sulfide, polyphenylene sulfide, polyacetal, polyamide, polyamide-imide, a liquid crystal polymer, polyetheretherketone, and polyetherimide.

[Background Leading to the Present Invention]

It has been found that even when the average aspect ratio and the average particle size as taught in Patent Literature 1 for a metallic pigment are controlled in a glitter pigment in which a metal oxide layer is formed on the surface of each flaky particle, the desired effect cannot be achieved. As a result of further studies on this factor, it has been confirmed that the reflectance of the metal oxide layer affects the noticeability of weld lines on the surface of a resin molded article. A metal oxide layer including titanium oxide, iron oxide, or the like has a lower reflectance than a metal layer of silver, copper, aluminum, or the like. Accordingly, when used in a resin composition, a glitter pigment in which a metal oxide layer is formed on the surface of each flaky particle tends to make weld lines on the surface of the resulting resin molded article more noticeable than a glitter pigment in which a metal layer is formed on the surface of each flaky particle. In view of the above, the present invention has been completed, and embodiments thereof will be described below.

[Glitter Pigment]

A glitter pigment of the present embodiment includes a flaky particle and a metal oxide layer formed on at least a portion of the surface of the flaky particle. The average particle size of the glitter pigment is 90 $\mu$m or more, the average thickness of the glitter pigment is more than 5 $\mu$m and 15 $\mu$m or less, and the ratio of the average particle size to the average thickness (aspect ratio) is 10 or more and 30 or less.

In the present specification, flaky particles refer to, for example, scaly particles having an average particle size of 90 $\mu$m or more and an average thickness of more than 5 $\mu$m and 15 $\mu$m or less.

The average particle size of the glitter pigment of the present embodiment is a particle size at 50% of the cumulative volume from the smaller particle size (D50) in a particle size distribution of the glitter pigment measured on the basis of the laser diffraction/scattering method.

The average thickness of the glitter pigment of the present embodiment is an average value determined as follows: for each of 100 coated glass flakes, the thickness is calculated by measuring the optical path difference between direct light (light not affected by a phase object) and light transmitted through the glitter pigment, using an interference microscope, and the sum of the thicknesses is divided by the number of measured flakes.

The present inventor has found that, to achieve excellent glitter in a glitter pigment including a flaky particle and a metal oxide layer formed on at least a portion of the surface of the flaky particle, it is desirable to control the average particle size of the glitter pigment to 90 $\mu$m or more, the average thickness to more than 5 $\mu$m and 15 $\mu$m or less, and the aspect ratio to 10 or more and 30 or less.

When the average particle size of the glitter pigment is 90 $\mu$m or more, the reflective area of each glitter pigment particle increases, and accordingly, the glitter of the glitter pigment increases. Furthermore, when the amount of the glitter pigment is constant, the smaller the average thickness of the glitter pigment, the larger the number of glitter pigment particles included. Therefore, owing to the average thickness of the glitter pigment being more than 5 $\mu$m and 15 $\mu$m or less, the glitter of the glitter pigment further increases. Moreover, by controlling the average thickness of the glitter pigment to more than 5 $\mu$m and 15 $\mu$m or less, an increase in the mass of each glitter pigment particle is suppressed. Accordingly, the glitter pigment in the molten resin is less susceptible to settling during injection molding, enabling a reduction in the force required for kneading. Consequently, the fragmentation of the glitter pigment caused by kneading can be suppressed, and the progression of wear of the molding apparatus including screws and the like and the resulting acceleration of equipment deterioration can be suppressed.

In the metallic pigment described in Patent Literature 1, as the particle size of the metal-coated glass flakes decreases and as the aspect ratio (particle size /thickness) of the metal-coated glass flakes increases, weld lines become more noticeable. For this reason, the average thickness of the glass flakes is increased to 15 to 31 $\mu$m to reduce the aspect ratio (Table 1). Accordingly, when the amount of the glitter pigment is constant, the number of glitter pigment particles included decreases, and therefore an increase in glitter cannot be expected. Furthermore, in the metallic pigment described in Patent Literature 1, when the average particle size of the metal-coated glass flakes is increased to 90 $\mu$m or more, the mass of the glass flakes further increases, and accordingly, the glass flakes in the molten resin are more likely to settle. Therefore, the force required for kneading increases, leading to the progression of wear of the molding apparatus including screws and the like and possibly accelerating equipment deterioration.

On the other hand, in the glitter pigment of the present embodiment, owing to the average particle size being 90 $\mu$m or more, the average thickness being more than 5 $\mu$m and 15 $\mu$m or less, and the aspect ratio being 10 or more and 30 or less, excellent glitter can be maintained, and at the same time, weld lines in a resin molded article can be made less noticeable.

The average particle size of the glitter pigment of the present embodiment is preferably 220 $\mu$m or less. Owing to the average particle size of the glitter pigment being 220 $\mu$m or less, the fragmentation of the glitter pigment caused by kneading can be readily suppressed. Therefore, a decrease in the glitter of the glitter pigment is suppressed.

The average particle size of the glitter pigment of the present embodiment may be 100 $\mu$m or more than 100 $\mu$m. When the average particle size of the glitter pigment is more than 100 $\mu$m, the glitter of the glitter pigment can further increase.

The average thickness of the glitter pigment of the present embodiment is preferably more than 5 $\mu$m and 10 $\mu$m or less. Owing to the average thickness of the glitter pigment being more than 5 $\mu$m and 10 $\mu$m or less, an increase in the mass of each glitter pigment particle is further suppressed. Therefore, during injection molding, the glitter pigment in the molten resin is even less susceptible to settling, and the glitter pigment can be dispersed with a smaller force during kneading.

The aspect ratio of the glitter pigment of the present embodiment is preferably 10 or more and 25 or less, more preferably 10 or more and less than 20, and still more preferably 10 or more and 15 or less. By controlling the aspect ratio within the numerical ranges as described above, weld lines in a resin molded article can be made even less noticeable.

The average particle size and the average thickness of the flaky particles included in the glitter pigment of the present embodiment may satisfy the same numerical ranges as the average particle size and the average thickness of the glitter pigment of the present embodiment. However, the average particle size and the average thickness of the flaky particles may be affected by formation of the metal oxide layer. Accordingly, the average particle size and the average thickness of the flaky particles included in the glitter pigment are not necessarily the same as the average particle size and the average thickness of the glitter pigment.

Examples of the flaky particles in the glitter pigment of the present embodiment include mica, synthetic mica, talc, glass flakes, silica flakes, and flaky bismuth oxychloride. Among these, glass flakes are preferred from the viewpoint that higher transparency can be achieved and high transparency is further accentuated when the amount of fine powder contained is small. That is, the flaky particle may be made of glass.

When the flaky particles are glass flakes, the composition of generally known glass can be used as the composition of the glass flakes. However, from the viewpoint of forming a metal oxide layer on at least a portion of the surface of each glass flake, the composition of the glass flakes is preferably a composition having excellent acid resistance, and, for example, C-glass or the like can be suitably used. A typical composition of C-glass is shown below. The compositions below are expressed in units of mass%.

$$65 \leq SiO_2 \leq 72,$$

$$1 \leq Al_2O_3 \leq 7,$$

$$4 \leq CaO \leq 11,$$

$$0 \leq MgO \leq 5,$$

$$9 \leq (Na_2O+K_2O) \leq 17,$$

$$0 \leq B_2O_3 \leq 8,$$

and

$$0 \leq ZnO \leq 6.$$

Furthermore, when the glass flakes are combined with a resin that is susceptible to alkali components, a glass composition having excellent acid resistance and a low alkali content is preferable. A glass composition that can be used in such a case includes the following components expressed in mass%:

$$59 \leq SiO_2 \leq 65,$$

$$8 \leq Al_2O_3 \leq 15,$$

$$47 \leq (SiO_2 - Al_2O_3) \leq 57,$$

$$1 \leq MgO \leq 5,$$

$$20 \leq CaO \leq 30,$$

$$0 < (Li_2O + Na_2O + K_2O) < 2,$$

and

$$0 \leq TiO_2 \leq 5,$$

and is substantially free of $B_2O_3$, F, ZnO, BaO, SrO, and $ZrO_2$. This glass composition is disclosed in WO 2006/068255 by the present applicant. Glass having this glass composition is hereinafter referred to as "TA glass". Being "substantially free" means that there is no intentional incorporation except for inevitable introduction from, for example, industrial raw materials. Specifically, being "substantially free" means that the respective contents of $B_2O_3$, F, ZnO, BaO, SrO, and $ZrO_2$

are each less than 0.1 mass% (preferably less than 0.05 mass%, and more preferably less than 0.03 mass%).

The composition of the glass flakes is not limited to the glass compositions of C-glass and TA glass described above. For example, glass compositions of A-glass, E-glass, ECR-glass, and S-glass can also be used. Glass compositions of low-dielectric glass disclosed by the present applicant (see, for example, JP 6505950 B, JP 6775159 B, WO 2020/255396, WO 2020/256142, WO 2020/256143, and WO 2021/049581) can also be used.

The glass flakes can be produced, for example, by a so-called blowing process as disclosed in JP S41(1966)-17148 B and JP S45(1970)-3541 B or a so-called rotary process as disclosed in JP S59(1984)-21533 A and JP H2(1990)-503669 A.

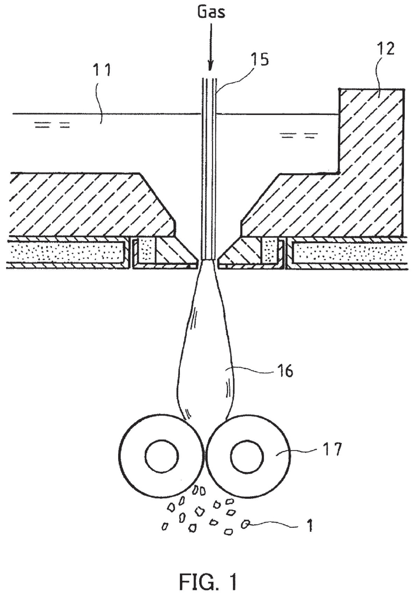

In the blowing process, the glass production apparatus shown in FIG. 1 can be used. This glass production apparatus includes a refractory tank furnace 12, a blowing nozzle 15, and pressure rolls 17. A glass material 11 is melted in the refractory tank furnace (melting tank) 12 and inflated into a balloon shape by gas supplied to the blowing nozzle 15, and a hollow glass film 16 is thus formed. The hollow glass film 16 is pulverized by the pressure rolls 17 to obtain glass flakes 1. By adjusting the drawing speed of the hollow glass film 16, the flow rate of the gas supplied through the blowing nozzle 15, and the like, the thickness of the glass flakes 1 can be controlled.

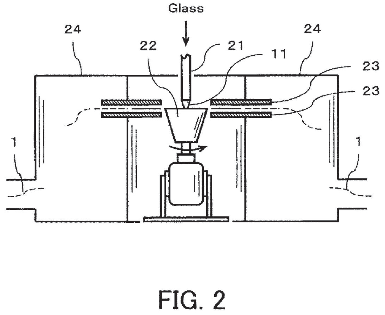

In the rotary process, the glass production apparatus shown in FIG. 2 can be used. This glass production apparatus includes a pipe 21, a rotary cup 22, a pair of annular plates 23, and an annular cyclone collector 24. The molten glass material 11 is poured into the rotary cup 22 through the pipe 21, flows out radially from the upper edge of the rotary cup 22 by centrifugal force, is drawn by airflow to pass through the gap between the annular plates 23, and is thus introduced into the annular cyclone collector 24. While passing through the gap between the annular plates 23, the glass is cooled and solidified into a thin film and then fragmented into fine pieces. Thus, the glass flakes 1 are obtained. By adjusting the distance between the annular plates 23, the velocity of the airflow, and the like, the thickness of the glass flakes 1 can be controlled.

In the glitter pigment of the present embodiment, the metal oxide layer coats at least a portion of the surface of the flaky particle. Preferably, the metal oxide layer coats the entire surface of the flaky particle.

The metal oxide layer can be formed, for example, of a metal oxide such as titanium oxide or iron oxide. By coating the flaky particle with such a metal oxide layer, a pearlescent pigment can be obtained.

The average thickness of the metal oxide layer is not particularly limited. In consideration of achievement of the glitter and cost, the average thickness of the metal oxide layer is, for example, preferably 0.01 $\mu$m or more and 0.3 $\mu$m or less, and more preferably 0.01 $\mu$m or more and 0.2 $\mu$m or less.

When used as a filler for imparting glitter to a resin composition as described above, the glitter pigment of the present embodiment can enhance the appearance of the resulting resin molded article. That is, the glitter pigment of the present embodiment may be used as a filler for imparting glitter to a resin composition. The resin composition may include the glitter pigment and a matrix resin.

[Resin Composition]

Next, a resin composition of the present embodiment will be described. The resin composition of the present embodiment includes a matrix resin and the glitter pigment of the present embodiment described above. By including as a filler, the glitter pigment of the present embodiment having the above features, the resin composition of the present embodiment can enhance the appearance of the resulting resin molded article.

The average particle size and the average thickness of the glitter pigment included in the resin composition of the present embodiment satisfy the same numerical ranges as the average particle size and the average thickness of the glitter pigment of the present embodiment described above. However, the average particle size and the average thickness of the glitter pigment may be affected by dispersion into the resin composition, specifically, by extrusion molding for obtaining the resin composition including the glitter pigment and/or injection molding for obtaining a resin molded article from the resin composition. Accordingly, the average particle size and the average thickness of the glitter pigment in the resin composition are not necessarily the same as the average particle size and the average thickness of the glitter pigment before being dispersed in the resin composition.

The average particle size of the glitter pigment included in the resin composition of the present embodiment, that is, the value of the particle size (D50) in the particle size distribution, is a value measured for the glitter pigment that is taken out by heating the resin composition in an atmosphere at 625°C to remove components other than the glitter pigment and then dispersing the luster pigment in water.

The average thickness of the glitter pigment included in the resin composition of the present embodiment is an average value determined as follows: for each of 100 or more glitter pigment taken out by heating the resin composition in an atmosphere at 625°C to remove components other than the glitter pigment, the thickness is calculated using an interference microscope, and the sum of the thicknesses is divided by the number of measured flakes.

The matrix resin may be, for example, a thermoplastic resin. The thermoplastic resin may be at least one selected from the group consisting of polypropylene, polyethylene, polybutylene terephthalate, polyethylene terephthalate, polycarbonate, a polystyrene-based resin, a styrene-acrylonitrile copolymer resin, polyacrylate, a styrene-butadiene-acrylonitrile copolymer resin, polyarylene sulfide, polyphenylene sulfide, polyacetal, polyamide, polyamide-imide, a liquid crystal polymer, polyetheretherketone, and polyetherimide.

Polycarbonate is known to be susceptible to alkali components. When the carbonate bonds contained in polycarbonate come into contact with an alkali component, decomposition of the resin proceeds. For this reason, when the glass flakes are made of TA glass having a low alkali content, the thermoplastic resin may be polycarbonate.

The content of the glitter pigment in the resin composition is preferably 0.01 mass% or more and 3 mass% or less. Setting the content of the glitter pigment to 3 mass% or less allows uniform dispersion of the glitter pigment in the resin composition. To further reduce the molding shrinkage, it is more preferable that the content of the glitter pigment be set to 0.1 mass% or more and 2 mass% or less.

The resin composition may include components other than the matrix resin and the glitter pigment. Examples of other components include a filler such as carbon black and a thermoplastic elastomer. Examples of thermoplastic elastomers include olefin-based elastomers, styrene-based elastomers, and hydrogenated polymer elastomers. Examples of olefin-based elastomers include ethylene-$\alpha$-olefin copolymer elastomers (such as an ethylene-propylene copolymer elastomer (EPR), an ethylene-butene copolymer elastomer (EBR), an ethylene-hexene copolymer elastomer (EHR), and an ethylene-octene copolymer elastomer (EOR)) and ethylene-$\alpha$-olefin-diene terpolymer elastomers (such as an ethylene-propylene-ethylidene norbornene copolymer, an ethylene-propylene-butadiene copolymer, and an ethylene-propylene-isoprene copolymer). Two or more of the thermoplastic elastomers can also be used in combination.

A resin molded article produced using the resin composition of the present embodiment maintains excellent glitter and at the same time exhibits an excellent appearance with less noticeable weld lines, owing to the inclusion of the glitter pigment.

Examples

The present invention will be described below in more detail with reference to examples. However, the present invention is not limited to the following examples. The following examples illustrate cases in which glass flakes are used as the flaky particles; however, the present invention is not limited thereto, and the flaky particles may be mica, synthetic mica, flaky bismuth oxychloride, or the like.

[Example 1]

<Step of Shaping Glass Flakes>

Glass flakes were produced by the blowing process described with reference to FIG. 1, using TA glass having the composition shown in Table 1. Specifically, the TA glass was placed in a melting furnace heated to 1500°C and melted. Air was blown into the molten glass through a nozzle to form thin glass, and this thin glass was continuously drawn out using rollers. The amount of air blown in and the rotational speed of the rollers were adjusted to obtain glass flakes having an average thickness of 10 $\mu$m.

[Table 1]

| TA glass | (unit: mass%) |
|---|---|
| $SiO_2$ | 61.45 |
| $Al_2O_3$ | 11.18 |
| CaO | 21.77 |
| MgO | 3.03 |
| $Li_2O$ | 0.35 |
| $Na_2O$ | 0.38 |
| $K_2O$ | 0.28 |
| $TiO_2$ | 1.56 |

<Pulverization and Classification Step>

The glass flakes were pulverized using a feather mill and then classified to obtain glass flakes having an average particle size of 100 $\mu$m.

<Pretreatment Step>

An amount of 1.2 kg of the glass flakes after the pulverization and classification step was added to 8.4 L of ion-exchanged water to obtain a liquid mixture. While the liquid mixture was stirred using a stirrer, dilute hydrochloric acid was added thereto to adjust the pH to 1.5, and a slurry was thus obtained. An amount of 0.6 L of an aqueous solution of 0.5 mass% tin(IV) chloride at room temperature was added to the slurry, and then dilute hydrochloric acid was added thereto to adjust the pH to 1.5, and a mixed slurry was thus obtained. The mixed slurry was stirred for 5 minutes, and then the glass flakes were collected from the mixed slurry by filtration under reduced pressure. The glass flakes collected were washed with ion-exchanged water. Thus, glass flakes subjected to pretreatment with tin were obtained.

<Step of Coating with Metal Oxide Layer>

Ion-exchanged water was added to 1.2 kg of the glass flakes after the pretreatment to obtain 12 L of a mixture. Hydrochloric acid was added to the mixture to adjust the pH to 1.0, and the mixture was heated to 75°C. Next, while the mixture was stirred, an aqueous titanium tetrachloride solution (containing Ti in 16.5 mass%) was added thereto quantitatively and caustic soda was added thereto to keep the pH constant. The quantitative addition of aqueous titanium tetrachloride solution and the addition of caustic soda were continued until the coating of the rutile-type titanium oxide formed on the surface of each glass flake exhibited a silver color tone with glitter. After the coating having the desired color tone was formed, the product was collected by filtration under reduced pressure. The product collected was washed with pure water, dried at 180°C, and then fired at 600°C. Thus, the coated glass flakes of Example 1, each having a rutile-type titanium oxide layer formed on its surface, were obtained.

<Step of Molding Resin Molded Article>

An amount of 1.0 part by weight of the coated glass flakes and 99 parts by weight of a bisphenol A type polycarbonate resin (Iupilon S3000F, manufactured by Mitsubishi Engineering-Plastics Corporation) were mixed, and then the mixture was extruded at a cylinder temperature of 290°C using an extrusion molding machine (Type VS-30, manufactured by TANABE PLASTICS MACHINERY CO., LTD.) to obtain pellets. The pellets obtained were dried at 120°C for 5 hours, and then a test piece (length: 80 mm × width: 10 mm × thickness: 5 mm) of the resin molded article of Example 1 was molded under the molding conditions below using an injection molding machine (PROMAT HM7, manufactured by NISSEI PLASTIC INDUSTRIAL CO., LTD.).

(Molding Conditions)

- Cylinder temperature

    Zone No. 1: 290°C
    Zone No. 2: 305°C
    Zone No. 3: 310°C
    Zone No. 4: 300°C
    NH (temperature of injection molding machine head): 300°C

- Mold temperature: 100°C
- Maximum filling pressure: 60 kg/cm$^3$
- Screw rotational speed: 150 rpm

[Example 2]

In the step of shaping glass flakes, glass flakes having an average thickness of 7 $\mu$m were obtained. Except for this, the same method as in Example 1 was followed to obtain the coated glass flakes of Example 2 each having a rutile-type titanium oxide layer formed on its surface. The coated glass flakes of Example 2 exhibited a silver interference color. Using the coated glass flakes of Example 2, a test piece of the resin molded article of Example 2 was obtained in the same manner as in Example 1.

[Example 3]

In the pulverization and classification step, glass flakes having an average particle size of 200 μm were obtained. Except for this, the same method as in Example 1 was followed to obtain the coated glass flakes of Example 3 each having a rutile-type titanium oxide layer formed on its surface. The coated glass flakes of Example 3 exhibited a silver interference color. Using the coated glass flakes of Example 3, a test piece of the resin molded article of Example 3 was obtained in the same manner as in Example 1.

[Example 4]

In the step of shaping glass flakes, glass flakes having an average thickness of 7 μm were obtained. Next, in the pulverization and classification step, glass flakes having an average particle size of 200 μm were obtained. Except for these, the same method as in Example 1 was followed to obtain the coated glass flakes of Example 4 each having a rutile-type titanium oxide layer formed on its surface. The coated glass flakes of Example 4 exhibited a silver interference color. Using the coated glass flakes of Example 4, a test piece of the resin molded article of Example 4 was obtained in the same manner as in Example 1.

[Comparative Example 1]

As the coated glass flakes of Comparative Example 1, a pigment (GT5090RS, manufactured by Nippon Sheet Glass Co., Ltd.) obtained by coating glass flake substrates (average particle size: 100 μm, average thickness: 5 μm) with a silver-colored rutile-type titanium oxide was used. Using the coated glass flakes of Comparative Example 1, a test piece of the resin molded article of Comparative Example 1 was obtained in the same manner as in Example 1.

[Comparative Example 2]

In the step of shaping glass flakes, glass flakes having an average thickness of 5 μm were obtained. Next, in the pulverization and classification step, glass flakes having an average particle size of 200 μm were obtained. Except for these, the same method as in Example 1 was followed to obtain the coated glass flakes of Comparative Example 2 each having a rutile-type titanium oxide layer formed on its surface. The coated glass flakes of Comparative Example 2 exhibited a silver interference color. Using the coated glass flakes of Comparative Example 2, a test piece of the resin molded article of Comparative Example 2 was obtained in the same manner as in Example 1.

[Comparative Example 3]

As the coated glass flakes of Comparative Example 3, a pigment (GT1080RS, manufactured by Nippon Sheet Glass Co., Ltd.) obtained by coating glass flake substrates (average particle size: 90 μm, average thickness: 1.3 μm) with a silver-colored rutile-type titanium oxide was used. Using the coated glass flakes of Comparative Example 3, a test piece of the resin molded article of Comparative Example 3 was obtained in the same manner as in Example 1.

[Comparative Example 4]

As the coated glass flakes of Comparative Example 4, a pigment (GT1200RS, manufactured by Nippon Sheet Glass Co., Ltd.) obtained by coating glass flake substrates (average particle size: 200 μm, average thickness: 1.3 μm) with a silver-colored rutile-type titanium oxide was used. Using the coated glass flakes of Comparative Example 4, a test piece of the resin molded article of Comparative Example 4 was obtained in the same manner as in Example 1.

[Comparative Example 5]

In the step of shaping glass flakes, glass flakes having an average thickness of 20 μm were obtained. Next, in the pulverization and classification step, glass flakes having an average particle size of 100 μm were obtained. Except for these, the same method as in Example 1 was followed to obtain the coated glass flakes of Comparative Example 5 each having a rutile-type titanium oxide layer formed on its surface. The coated glass flakes of Comparative Example 5 exhibited a silver interference color. Using the coated glass flakes of Comparative Example 5, a test piece of the resin molded article of Comparative Example 5 was obtained in the same manner as in Example 1.

[Comparative Example 6]

In the step of shaping glass flakes, glass flakes having an average thickness of 12.5 μm were obtained. Next, in the pulverization and classification step, glass flakes having an average particle size of 100 μm were obtained. Except for these, the same method as in Example 1 was followed to obtain the coated glass flakes of Comparative Example 6 each having a rutile-type titanium oxide layer formed on its surface. The coated glass flakes of Comparative Example 6 exhibited a silver interference color. Using the coated glass flakes of Comparative Example 6, a test piece of the resin molded article of Comparative Example 6 was obtained in the same manner as in Example 1.

<Measurement of Average Particle Size>

Measurement of the average particle size of the coated glass flakes was performed, in which the particle size distribution of the coated glass flakes was measured using a laser diffraction particle size analyzer (Microtrac MT3300EX II, manufactured by MicrotracBEL Corp.), and the value of the particle size at 50% of the cumulative volume (D50) was read from the measurement result. The results are shown in Table 2.

<Measurement of Average Thickness>

Measurement of the average thickness of the coated glass flakes was performed as follows. For each of 100 coated glass flakes, the thickness was calculated by measuring the optical path difference between direct light (light not affected by a phase object) and light transmitted through the coated glass flake, using an interference microscope (INTERPHAKO, manufactured by CARL ZEISS JENA). The sum of the thicknesses was divided by the number of measured flakes to determine the average value. The results are shown in Table 2.

<Calculation of Aspect Ratio>

The aspect ratio was determined as the ratio of the average particle size of the coated glass flakes to the average thickness of the coated glass flakes. The results are shown in Table 2.

<Evaluation of Appearance>

The appearance of the resin molded article was evaluated by visually inspecting the visibility of the weld line on the surface of the test piece of the resin molded article. The results are shown in Table 2. In Table 2, A to D indicate the following:

A: The weld line was hardly observed;
B: Although no linear weld line was observed, there was a region where the weld line was partially and faintly observed;
C: The weld line was faintly observed in a linear manner; and
D: The weld line was observed in a dark and distinct linear manner.

<Evaluation of Glitter>

The glitter of the resin molded article was evaluated by visually inspecting the surface of the test piece of the resin molded article. The results are shown in Table 2. In Table 2, a to d indicate the following:

a: Strong glitter was exhibited;
b: Glitter was exhibited;
c: Slightly low glitter was exhibited; and
d: Low glitter was exhibited.

[Table 2]

|  | Example 1 | Example 2 | Example 3 | Example 4 |
|---|---|---|---|---|
| Average thickness (μm) | 10 | 7 | 10 | 7 |
| Average particle size (μm) | 100 | 100 | 200 | 200 |
| Aspect ratio (Average particle size/ Average thickness) | 10 | 14 | 20 | 28.6 |

(continued)

| | Example 1 | Example 2 | Example 3 | Example 4 |
|---|---|---|---|---|
| Resin (parts by weight) | 99 | 99 | 99 | 99 |
| Coated glass flakes (parts by weight) | 1.0 | 1.0 | 1.0 | 1.0 |
| Appearance evaluation | A | A | B | B |
| Glitter evaluation | b | b | a | a |

Table 2] (Continued)

| | Comparative Example 1 | Comparative Example 2 | Comparative Example 3 | Comparative Example 4 | Comparative Example 5 | Comparative Example 6 |
|---|---|---|---|---|---|---|
| Average thickness (μm) | 5 | 5 | 1.3 | 1.3 | 20 | 12.5 |
| Average particle size (μm) | 100 | 200 | 90 | 200 | 100 | 100 |
| Aspect ratio (Average particle size/ Average thickness) | 20 | 40 | 69 | 154 | 5 | 8 |
| Resin (parts by weight) | 99 | 99 | 99 | 99 | 99 | 99 |
| Coated glass flakes (parts by weight) | 1.0 | 1.0 | 1.0 | 1.0 | 1.0 | 1.0 |
| Appearance evaluation | C | C | D | D | A | A |
| Glitter evaluation | c | c | d | d | d | c |

As shown in Table 1, the resin molded articles of Examples 1 to 4, in which the coated glass flakes satisfy an average particle size of 90 μm or more, an average thickness of more than 5 μm and 15 μm or less, and an aspect ratio of 10 or more and 30 or less, exhibited excellent appearance and excellent glitter. In the resin molded articles of Comparative Examples 1 to 4, it is presumed that the excessively small average thicknesses of the coated glass flakes resulted in an increased number of particles due to the fragmentation of the coated glass flakes caused by kneading, consequently exhibiting noticeable weld lines as well as reduced glitter. In the resin molded articles of Comparative Examples 5 and 6, although the fragmentation of the coated glass flakes caused by kneading was suppressed, it is presumed that the excessively large average thicknesses of the coated glass flakes resulted in a decreased number of particles, exhibiting reduced glitter.

As is evident from the comparison of Examples 1 and 2 with Examples 3 and 4, when the average particle size was more than 100 μm, the resin molded article was excellent, particularly in glitter.

As is evident from the comparison of Examples 1 and 2 with Examples 3 and 4, when the aspect ratio was 10 or more and less than 20, the resin molded article was excellent, particularly in appearance.

INDUSTRIAL APPLICABILITY

The flaky particle of the present invention, when used as a filler for imparting glitter to a resin composition, can enhance the appearance of the resulting resin molded article, and therefore is applicable to various uses.

**Claims**

1. A glitter pigment comprising:

   a flaky particle; and
   a metal oxide layer formed on at least a portion of a surface of the flaky particle, wherein
   an average particle size is 90 μm or more, and an average thickness is more than 5 μm and 15 μm or less, and
   a ratio of the average particle size to the average thickness is 10 or more and 30 or less.

2. The glitter pigment according to claim 1, wherein
   the flaky particle is made of glass.

3. The glitter pigment according to claim 1, wherein
   the average particle size is 220 μm or less.

4. A resin composition comprising a glitter pigment and a matrix resin,
   the glitter pigment comprising:

   a flaky particle; and
   a metal oxide layer formed on at least a portion of a surface of the flaky particle, wherein
   an average particle size of the glitter pigment is 90 μm or more, and an average thickness of the glitter pigment is more than 5 μm and 15 μm or less, and
   a ratio of the average particle size of the glitter pigment to the average thickness of the glitter pigment is 10 or more and 30 or less.

5. The resin composition according to claim 4, wherein
   the flaky particle is made of glass.

6. The resin composition according to claim 4, wherein
   the average particle size of the glitter pigment is 220 μm or less.

7. The resin composition according to claim 4, wherein
   the matrix resin is a thermoplastic resin.

8. The resin composition according to claim 7, wherein
   the thermoplastic resin is at least one selected from the group consisting of polypropylene, polyethylene, polybutylene terephthalate, polyethylene terephthalate, polycarbonate, a polystyrene-based resin, a styrene-acrylonitrile copolymer resin, polyacrylate, a styrene-butadiene-acrylonitrile copolymer resin, polyarylene sulfide, polyphenylene sulfide, polyacetal, polyamide, polyamide-imide, a liquid crystal polymer, polyetheretherketone, and polyetherimide.

FIG. 1

FIG. 2

## INTERNATIONAL SEARCH REPORT

| International application No. |
|---|
| **PCT/JP2024/025775** |

### A. CLASSIFICATION OF SUBJECT MATTER

*C09C 3/06*(2006.01)i; *C08K 7/00*(2006.01)i; *C08L 101/00*(2006.01)i; *C09D 17/00*(2006.01)i
FI:  C09C3/06; C08K7/00; C08L101/00; C09D17/00

According to International Patent Classification (IPC) or to both national classification and IPC

### B. FIELDS SEARCHED

Minimum documentation searched (classification system followed by classification symbols)

C09C3/06; C08K7/00; C08L101/00; C09D17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2002-226732 A (NIPPON SHEET GLASS COMPANY, LIMITED) 14 August 2002 (2002-08-14)<br>claims 1, 4, 6, examples 8, 10, 23, paragraph [0040] | 1-8 |
| X | JP 2001-226500 A (NIPPON SHEET GLASS COMPANY, LIMITED) 21 August 2001 (2001-08-21)<br>claim 1, examples, tables 1-2 | 1-8 |
| X | WO 2013/085050 A1 (NIPPON SHEET GLASS COMPANY, LIMITED) 13 June 2013 (2013-06-13)<br>claims 1, 10, table 7, examples 4-5, paragraph [0078] | 1-8 |
| A | JP 11-130978 A (NISSHIN STEEL CO., LTD.) 18 May 1999 (1999-05-18)<br>entire text | 1-8 |

☐ Further documents are listed in the continuation of Box C.      ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **10 September 2024** | **24 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/025775**

| Patent document cited in search report | | | Publication date (day/month/year) | Patent family member(s) | Publication date (day/month/year) |
|---|---|---|---|---|---|
| JP | 2002-226732 | A | 14 August 2002 | (Family: none) | |
| JP | 2001-226500 | A | 21 August 2001 | (Family: none) | |
| WO | 2013/085050 | A1 | 13 June 2013 | US 2014/0349009 A1 claims 1, 10, table 7, examples 4-5, paragraph [0094] EP 2789659 A1 CN 103975027 A | |
| JP | 11-130978 | A | 18 May 1999 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3456252 B
- WO 2006068255 A
- JP 6505950 B
- JP 6775159 B
- WO 2020255396 A
- WO 2020256142 A
- WO 2020256143 A
- WO 2021049581 A
- JP S41196617148 B
- JP S4519703541 B
- JP S59198421533 A
- JP H21990503669 A